# EUROPÄISCHE PATENTANMELDUNG

(11) **EP 2 402 154 A1**
(43) Veröffentlichungstag der Anmeldung: **04.01.2012**
(21) Anmeldenummer: 11171294.9
(22) Anmeldetag: 24.06.2011
(51) Int. Cl.: B32B 21/06, B32B 29/00, B44C 5/04, D21H 27/26, B41M 5/50, B32B 21/02, B32B 3/02, B32B 38/14, E04F 15/02

(54) **Verfahren zur Herstellung von flächigen Bauteilen sowie flächiges Bauteil**

(30) Priorität: 29.06.2010 DE 102010025543
(71) Anmelder: Schulte, Guido, 59602 Rüthen-Meiste (DE)
(72) Erfinder: Schulte, Guido, 59602 Rüthen-Meiste (DE)
(74) Vertreter: Griepenstroh, Jörg

(57) **Zusammenfassung**

Verfahren zur Herstellung von flächigen Bauteilen zur Verkleidung von Boden-, Wand-, oder Deckenflächen, bei welchem eine auf einen Grundkörper (2) eine Papierschicht (3) aufgebracht wird, wobei die Papierschicht (3) zunächst beharzt und anschließend mittels eines digitalen Tintenstrahldruckverfahrens mit einem Dekor (6) bedruckt wird. Zum Bedrucken wird eine durch UV-Licht härtbare Tinte verwendet, welche unmittelbar im Anschluss an den Druckvorgang durch UV-Licht gehärtet wird.

## Beschreibung

Die Erfindung betrifft ein Verfahren zur Herstellung von flächigen Bauteilen zur Verkleidung von Boden-, Wand- oder Deckenflächen gemäß den Merkmalen im Oberbegriff des Patentanspruchs 1 sowie ein nach diesem Verfahren hergestelltes flächiges Bauteil.

Es zählt zum Stand der Technik, Paneele zur Verkleidung von Wand- und Deckenflächen sowie Bodenelemente mit aufgedruckten Oberflächendekoren zu versehen, Üblicherweise wird eine Druckwalze im direkten Druckverfahren verwendet, um das Dekor auf eine Platte oder auch auf eine Papierschicht aufzubringen, welche dann mit einem plattenförmigen Grundkörper verbunden wird. Auf diese Weise erfolgt insbesondere die Laminatherstellung.

Durch die DE 10 2008 033 274 A1 zählt beispielsweise ein Verfahren zum Bedrucken von Druckpapier von einer Rolle mit wenigstens einem Dekorbild aufweisenden Dekor zur Verwendung bei flächigen Bauteilen, insbesondere für Boden-, Wand-, Decken- oder Möbelanwendungen zum Stand der Technik. Dabei wird auf einen Papierabschnitt des Druckpapiers mit vorbestimmter Länge ein vorgegebenes Druckbild vorgesehen, das mittels eines digitalen Druckverfahrens durch eine Digitaldruckvorrichtung bedruckt wird. Nachfolgende Papierabschnitte können ein anderes, weiteres Dekorbild aufweisen als das Dekorbild des vorhergehenden Papierabschnitts. Dadurch können auf einer Rolle Druckpapier mit erhöhter Variabilität unterschiedliche Dekorbilder gedruckt werden.

Digitaldruck im Zusammenhang mit Bodenelementen bzw. Wand- oder Deckenpaneelen wird auch in der DE 10 2007 013 132 A1 beschrieben, Bei den einzelnen flächigen bedruckten Bauteilen handelt es sich insbesondere um Holzwerkstoffplatten wie MDF-, HDF- oder DKS-Platten oder um so genannte HPL (High Pressure Laminate)-Platten. Es wird vorgeschlagen, auf die Oberseite des Grundkörpers eine bedruckte Papierschicht aufzubringen und fest mit dem Grundkörper zu verbinden. Auf die Farbschicht der Papierschicht wird dann eine Schutzschicht aufgebracht, die dem Schutz der Farbschicht vor UV-Strahlung und insbesondere mechanischer Beschädigung dient. Die Schutzschicht ist transparent.

Die übliche Vorgehensweise zur Herstellung von flächigen Bauteilen ist, dass die Papierschichten mittels eines Druckverfahrens, bei welchem ein Druckkörper mit der Papierschicht in Kontakt kommt, insbesondere mittels eines Rotationstiefdruckverfahrens, mit einem Dekor bedruckt wird. Die so bedruckte Papierschicht wird mit einer Schutzschicht versehen, das heißt, sie wird imprägniert. Die üblichen Bahnbreiten bei Tiefdruckverfahren liegen zwischen 2,0 m und 5,5 m. Häufig werden nach dem Drucken die Dekorpapierbahnen auf ein schmaleres Maß zur Weiterverarbeitung aufgetrennt. Übliche Bahnbreiten sind 1,25 m bzw. 2,1 m. Diese beiden Breiten sind gängige Formate bei der Imprägnierung mit aminoplastischen Harzen. Das Papier wird in aller Regel durchgetränkt. Es ist auch möglich, das Harz asymmetrisch auf der bedruckten Papierbahn aufzubringen. Nach der Imprägnierung wird das Harz getrocknet, was zu einer Teilkondensierung führt. Die finale Härtung erfolgt anschließend bei der Verpressung mit dem Grundkörper. Eine die vorstehend besschriebene Papierbahn ist nach der Imprägnierung spröde. In jedem Fall nimmt die Steifigkeit der papierbahn gegenüber einer unimprägnierten Papierbahn stark zu. Ein Nachteil bei dieser Fertigungsreihenfolge ist, dass bei dem Bedrucken und Imprägnieren von Dekorpapieren das Papier ein Wachstum erfährt, das für eine korrekte Verpressung mittels eines Pressblechs genau bekannt sein muss. Nur so lassen sich dekorsynchrone Strukturen durch Verpressen herstellen, Hierbei wird davon ausgegangen, dass das Pressblech nicht absolut eben ist, sondern eine Struktur oder Rauigkeitsunterschiede (Glanzgradunterschiede) aufweist, die exakt auf das Dekor abgestimmt sein muss. Ein Versatz zwischen dem Dekor und der Oberflächenprofilierung führt zu einer unrealistischen Optik, was insbesondere im Laminatbereich dazu führen kann, dass der angestrebte realistische Oberflächeneindruck, beispielsweise einer Holzstruktur, zumindest teilweise verloren geht.

Hiervon ausgehend liegt der Erfindung die Aufgabe zugrunde, ein Verfahren zur Herstellung von flächigen Bauteilen zur Verkleidung von Boden-, Wand- oder Deckenflächen fertigungstechnisch zu optimieren, wobei die Abstimmung zwischen dem Papier und der Struktur eines Pressblechs, das zum Verpressen der Papierschicht mit dem Grundkörper verwendet wird, verbessert werden soll.

Diese Aufgabe ist bei dem erfindungsgemäßen Verfahren durch die Merkmale des Patentanspruchs 1 gelöst.

Die Unteransprüche betreffen zweckmäßige Weiterbildungen des Erfindungsgedankens. Ein nach diesem Verfahren hergestelltes flächiges Bauteil zur Verkleidung von Boden-, Wand- oder Deckenflächen ist Gegenstand des Patentanspruchs 8.

Bei dem erfindungsgemäßen Verfahren ist vorgesehen, auf einen Grundkörper eine Papierschicht durch Pressen aufzubringen, wobei die Papierschicht zunächst beharzt, das heißt imprägniert, und anschließend mittels eines digitalen Tintenstrahldruckverfahrens mit einem Dekor bedruckt wird. Zum Bedrucken wird eine durch UV-Licht härtbare Tinte verwendet, welche unmittelbar im Anschluss an den Druckvorgang durch UV-Licht gehärtet wird.

Übliche wässrige Tinten oder lösemittelhaltige Tinten verlaufen auf imprägnierten Papierschichten und ergeben kein scharfes Druckbild mehr. Diese Tinten müssen zudem mittels Wärme, zumeist mittels Infrarot-Strahlen, getrocknet werden. Dies führt zu Reaktionen bei den Harzen des Imprägnats, das eine weitere Verarbeitung in der Presse stört.

Diese erfindungsgemäße Vorgehensweise hat den Vorteil, dass durch UV-Härtung weniger Wärme in die bereits imprägnierte Papierschicht eingebracht wird, so dass das durch das Imprägnieren in der Papierschicht enthaltene Harz nicht beeinträchtigt wird. Es kommt dadurch zu geringeren Dehnungen bzw. zu einem geringeren Wachstum des Papiers, wodurch eine porensynchrone Herstellung zwischen dem aufgedruckten Dekor und dem profilierten Pressblech vereinfacht wird. Papierbahnen, die in Rollenabwickelstationen bedruckt werden, werden dabei in der Länge gedehnt und in der Breite eingeschnürt. Unter Vermeidung von Druckfarben bzw. Tinten auf wässriger Basis, die bekanntlich zu einem Wachstum der Papierschicht führen, können mit dem erfindungsgemäßen Verfahren diese wachstumsauslösenden Parameter komplett eliminiert werden.

Ein weiterer Vorteil ist, dass durch die diese Verfahrensweise das Handling vereinfacht wird. Heutiger Stand der Technik ist es, das Dekor in einer Druckerei auf die Papierschicht drucken zu lassen. Anschließend wird die bedruckte Papierschicht imprägniert und schließlich bei einem Hersteller von zum Beispiel Laminatböden mit dem Grundkörper verpresst. Bei der Erfindung kann hingegen ein bedrucktes oder unbedrucktes Basispapier beschafft und vorab imprägniert werden, um erst dann mit einem Digitaldrucker das gewünschte Dekor aufzutragen, was ohne längere Trocknungszeiten unmittelbar in einer Presse zusammen mit dem Grundkörper insbesondere zu einem Laminatboden verpresst werden kann. Die Auftragmenge der verwendeten Tinte kann zwischen 1 g/m² bis 10 g/m², vorzugsweise zwischen 3 g/m² und 6 g/m² liegen.

Mit der Erfindung können alle handelsüblichen Papiere bedruckt werden. Es ist aber auch möglich, spezielle transparente Overlay-Papiere zu verwenden, Overlay-Papiere sind ungefüllte, transparente Spezialpapiere, die teilweise mit Korund verseht sein können. Wird ein solches Overlay spiegelverkehrt auf der Unterseite des Overlay-Papiers bedruckt und vor der Verpressung mit dem Druck nach unten in Richtung des Grundkörpers gelegt, ist das Druckbild automatisch gegen Abrieb und Verschleiß geschützt. Zur besseren Erkennung des Dekorbilds ist es sinnvoll, ein neutrales weißes Untergrundpapier unterhalb des Overlays einzusetzen. Dies gilt insbesondere dann, wenn der Grundkörper nicht hell oder weiß ist. Als Besonderheit ist anzumerken, dass es Digitalfarben nicht nur gemäß des CMYK-Farbschemas, sondern auch in Weiß gibt. So ist ein Druck auf dem transparenten Overlay-Papier auch mit Weiß möglich, was ein sehr gutes Druckbild ergibt und den Einsatz eines weißen Untergrundpapiers, das gewissermaßen den Hintergrund bildet, erübrigt. Das erfindungsgemäße Verfahren eignet sich zur Herstellung von flächigen Bauelementen wie Türen, Wandverkleidungsplatten, aber insbesondere auch für Möbelteile, wie zum Beispiel Küchenmöbelfronten.

Als weiterer Vorteil wird angesehen, dass der Digitaldrucker keine aufwendige Papierauf- und -abwickelstation benötigt. Die imprägnierte Papierschicht besitzt eine gewisse Steifigkeit und kann nicht so ohne weiteres gebogen werden. Daher werden einzelne Bögen durch den Digitaldrucker geführt. Der Transport der einzelnen Papierbögen kann über Saugmittel erfolgen.

Das Bedrucken mittels der durch UV-Licht härtbaren Tinte kann teilweise oder vollflächig erfolgen. Es können auch mehrere Druckvorgänge nacheinander erfolgen. Beispielsweise ist ein partielles Bedrucken von herkömmlich bedruckten und imprägnierten Papierschichten möglich.

Eine Vorimprägnierung der Papierschicht bildet einen hervorragenden Untergrund für die besondere, durch UV-Licht härtbare Tinte, da die Tinte nicht tief in die Papierschicht einziehen kann. Dadurch befindet sie sich gewissermaßen auf der Oberfläche der imprägnierten Papierschicht. Das führt zu einem extrem scharfen Druckbild. Übliche Tinte, insbesondere lösungsmittelhaltige Tinten, würden auf einer imprägnierten Papierschicht verlaufen oder bei der Trocknung der Tinte zu Reaktionen des Imprägnierharzes führen. Durch die Verwendung von mittels UV-Licht härtbarer Tinte findet jedoch keine Reaktion mit dem Imprägnierharz statt. Es kommt auch nicht zu einem Verlaufen der Tinte, so dass sich das gewünschte, gestochen scharfe Druckbild ergibt.

Mit dem erfindungsgemäßen Verfahren wird insbesondere ein Laminatboden hergestellt. Dabei wird als Grundkörper bevorzugt eine Trägerplatte aus einem Holzwerkstoff verwendet, welche nach dem Verpressen mit der Papierschicht zur Ausbildung einer Verbindungsgeometrie randseitig profiliert wird. Das fertige flächige Erzeugnis ist ein flächiges Bauteil zur Verkleidung von Boden-, Wand- oder Deckenflächen mit einem Grundkörper in Form einer randseitig profilierten Trägerplatte aus einem Holzwerkstoff, mit welcher eine Papierschicht verpresst ist, die nach dem vorhergehend beschriebenen Verfahren imprägniert und bedruckt worden ist. Insbesondere im Laminatbereich wird noch vor dem Verpressen eine Schutzschicht auf die Papierschicht aufgetragen, um das Dekor bzw. allgemein die Papierschicht vor Beschädigungen zu schützen. Die so mit der Schutzschicht versehene Papierschicht wird vor dem Verpressen zugeschnitten.

Es ist im Rahmen der Erfindung auch möglich, als Grundkörper andere Trägerplatten als solche aus Holzwerkstoffen zu verwenden, wobei es gegebenenfalls erforderlich ist, die Dekorschicht mit dem Grundkörper zu leimen oder zu verkleben. Je nach Wahl des Grundkörpers kann ein Gegenzug zur Stabilisierung des Schichtaufbaus am Grundkörper notwendig sein. Die randseitige Profilierung des Grundkörpers ist insbesondere eine Profilierung eines leimfreien so genannten Klicksystems, bei welchem benachbarte Grundkörper formschlüssig miteinander verbunden werden können.

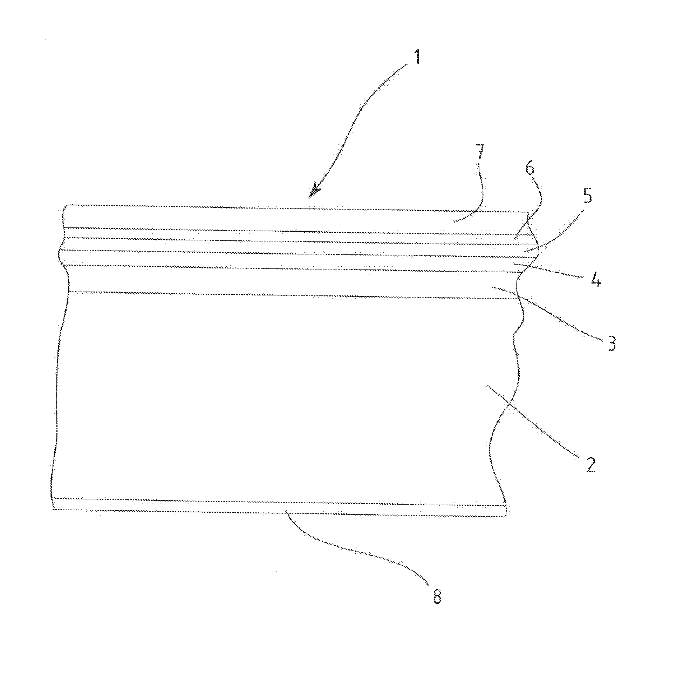

Die Erfindung wird nachfolgend anhand eines in der Zeichnung schematisch dargestellten Ausführungsbeispiels näher erläutert.

Die Figur zeigt ein flächiges Bauteil 1, von welchem nur ein Teilbereich der Oberfläche im Querschnitt dargestellt ist. Tragendes Element des flächigen Bauteils 1 ist ein Grundkörper 2. Der Grundkörper 2 selbst kann ein- oder mehrlagig aufgebaut sein und besteht insbesondere aus Holz- und/oder Kunstwerkstoffen. Insbesondere kann es sich bei dem Grundkörper 2 um Holzwerkstoffplaten, wie MDF-, HDF- oder DKS-Platten oder um so genannte HPL (High Pressure Laminate)-Platten handeln.

Auf den Grundkörper 2 ist eine bedruckte Papierschicht 3 aufgebracht. Die Papierschicht 3 besteht aus einer gängigen Dekorpapierart mit einem Flächengewicht von 35 g/m² bis 160 g/m².

Die Papierschicht 3 ist mehrfach bedruckt. In diesem Ausführungsbeispiel sind übereinanderliegend zwei Druckschichten aufgetragen. Eine untere Druckschicht stellt ein unteres Dekor 4 dar. Dieses untere Dekor 4 ist mittels eines Rotationstiefdruckverfahrens auf die Papierschicht 3 aufgetragen. Das untere Dekor 4 dient nicht zur Vergleichmäßigung im Sinne einer Grundierung, sondern ist gezielt koloriert, um im Zusammenhang mit einer weiteren Druckschicht ein Gesamtdekor zu ergeben. Das weitere Dekor wird allerdings erst aufgetragen, nachdem die Papierschicht 3 imprägniert worden ist. Das heißt, die Papierschicht 3 wird beharzt. Die so beschichtete Papierschicht 3, die optional mit dem unteren Dekor 4 versehen ist, wird beharzt, das heißt imprägniert. Auf die Imprägnierung 5 wird im nächsten Schritt ein oberes Dekor 6 aufgedruckt. Das obere Dekor 6 wird mittels eines digitalen Tintenstrahldruckverfahrens mit einer UV-härtbaren Tinte aufgetragen, welche unmittelbar im Anschluss an den Druckvorgang durch UV-Licht gehärtet wird. Dadurch kann die Tinte sofort aushärten. Die Tinte verläuft nicht auf der lmprägnierschicht 5. Es ergibt sich ein sehr exaktes Druckbild.

Mit der Entwicklung einer UV-härtenden Digitaldrucktinte ist es möglich, ein gestochen scharfes Druckbild zu erzeugen, da die Trocknung der UV-härtbaren Tinte das Imprägnat nicht zerstört. Zwischen der Tinte und dem aminoplastischen Harz findet eine Vernetzung statt, gleichzeitig jedoch keine dichte Ausfilmung des Digitaldrucks. So ist ein Verbund ohne Trennwirkung möglich, insbesondere da ein abriebfestes Overlay auf der digital bedruckten Papierschicht möglich ist.

Anschließend wird eine transparente Schutzschicht 7 aufgetragen. In der Schutzschicht 7 können harte Partikel, wie zum Beispiel Korund, eingebettet sein. Die Schutzschicht 7 kommt in der Regel bei solchen Bauteilen zur Anwendung, die bodenseitig verlegt werden. Auf der Unterseite des Grundkörpers befindet sich ein Gegenzug 8.

### Bezugszeichen :

- 1 -: Bauteil
- 2 -: Grundkörper
- 3 -: Papierschicht
- 4 -: unteres Dekor
- 5 -: Imprägnierschicht
- 6-: oberes Dekor
- 7-: Schutzschicht
- 8 -: Gegenzug

## Patentansprüche

1. Verfahren zur Herstellung von flächigen Bauteilen zur Verkleidung von Boden-, Wand-, oder Deckenflächen, bei welchem eine auf einen Grundkörper (2) eine Papierschicht (3) aufgebracht wird, wobei die Papierschicht (3) zunächst beharzt und anschließend mittels eines digitalen Tintenstrahldruckverfahrens mit einem Dekor (6) bedruckt wird, **dadurch gekennzeichnet, dass** zum Bedrucken eine durch UV-Licht härtbare Tinte verwendet wird, welche unmittelbar im Anschluss an den Druckvorgang durch UV-Licht gehärtet wird.

2. Verfahren nach Anspruch 1, **dadurch gekennzeichnet, dass** die Papierschicht (3) vor dem Imprägnieren mittels eines Druckverfahrens, bei welchem ein Druckkörper mit der Papierschicht in Kontakt kommt, mit einem unteren Dekor (4) bedruckt wird.

3. Verfahren nach Anspruch 2, **dadurch gekennzeichnet, dass** das untere Dekor (4) mittels Rotationstiefdruck aufgetragen wird.

4. Verfahren nach einem der Ansprüche 1 bis 3, **dadurch gekennzeichnet, dass** das mittels UV-härtbarer Tinte aufgetragene obere Dekor (6) teilflächig auf das untere Dekor (4) aufgetragen wird.

5. Verfahren nach einem der Ansprüche 1 bis 4, **dadurch gekennzeichnet, dass** das obere Dekor (5) mit einer Tintenmenge von 1 g/m² bis 10 g/m², insbesondere 3 g/m² bis 6 g/m² hergestellt wird.

6. Verfahren nach einem der Ansprüche 1 bis 5, **dadurch gekennzeichnet, dass** die Papierschicht (3) mit einer Schutzschicht (7) versehen wird und vor dem Verpressen mit dem Grundkörper (2) zugeschnitten wird.

7. Verfahren nach einem der Ansprüche 1 bis 6, **dadurch gekennzeichnet, dass** als Grundkörper (2) eine Trägerplatte aus einem Holzwerkstoff verwendet wird, welche nach dem Verpressen mit der Papierschicht (3) zur Ausbildung einer Verbindungsgeometrie randseitig profiliert wird.

8. Flächiges Bauteil zur Verkleidung von Boden-, Wand-, oder Deckenflächen mit einem Grundkörper (2) in Form einer randseitig profilierten Trägerplatte, mit welcher eine Papierschicht (3) verpresst ist, die nach einem der Ansprüche 1 bis 6 hergestellt ist

9. Bauteil nach Anspruch 8, **dadurch gekennzeichnet, dass** der Grundkörper (2) randseitig mit einer Profilierung eines leimfreien Klicksystems versehen ist.

10. Bauteil nach einem der Ansprüche 8 oder 9, **dadurch gekennzeichnet, dass** der Grundkörper (2) eine Holzwerkstoffplatte ist.
